# EUROPÄISCHE PATENTANMELDUNG

(11) **EP 1 829 658 A2**
(43) Veröffentlichungstag der Anmeldung: **05.09.2007**
(21) Anmeldenummer: 07003715.5
(22) Anmeldetag: 23.02.2007
(51) Int. Cl.: B28B 3/20, B28B 11/24, B29C 47/34

(54) **Vorrichtung zum Handhaben deformationsgefährdeter frisch extrudierter Ziehkörper**

(30) Priorität: 03.03.2006 DE 102006010393
(71) Anmelder: Maschinen- und Stahlbau Julius Lippert GmbH & Co., D-92690 Pressath (DE)
(72) Erfinder: Schneider, Wolfgang, 96515 Sonneberg (DE)
(74) Vertreter: LOUIS, PÖHLAU, LOHRENTZ

(57) **Zusammenfassung**

Es wird eine Vorrichtung zum Abnehmen und Entfernen deformationsgefährdeter, frisch horizontal extrudierter Ziehkörper (10) vom Mundstück (16) eines Extruders (18) beschrieben, wobei die Vorrichtung mindestens eine Ziehkörpertrageinrichtung (20) aufweist, die einen formstabilen Grundkörper (22) mit einem nach oben offenen U-förmigen Querschnittsprofil und ein im Grundkörper (22) hängend angebrachtes, flexibles Lagerflächenelement (24) zum Einlegen jeweils eines frisch extrudierten Ziehkörpers (10) aufweist.

## Beschreibung

Die Erfindung betrifft eine Vorrichtung zum Abnehmen und Entfernen deformationsgefährdeter, frisch horizontal extrudierter Ziehkörper vom Mundstück eines Extruders.

Bei derartigen deformationsgefährdeten Ziehkörpern handelt es sich beispielsweise um keramische Katalysatorkörper mit einer Wabenstruktur, um Filterkörper für Dieselrußfilter usw.

Bislang werden solche deformationsgefährdete, frisch horizontal extrudierte Ziehkörper üblicherweise vom Mundstück des Extruders mit Hilfe von Förderbändern entfernt und getrocknet. Durch den flächigen Kontakt der frisch extrudierten Ziehkörper mit dem Förderband sind jedoch Deformationen und Trocknungsbehinderungen kaum vermeidbar. Aus solchen Trocknungsbehinderungen resultiert oftmals eine Rissbildung im Ziehkörper. Risse stellen einen Produktionsausschuss dar.

In Kenntnis dieser Gegebenheiten liegt der Erfindung die Aufgabe zugrunde, eine Vorrichtung der eingangs genannten Art zu schaffen, mit der die erwähnten Mängel mit einfachen Mitteln vermieden werden, d.h. mit der Deformationen und eine Trocknungsbehinderung deformationsgefährdeter, frisch horizontal extrudierter Ziehkörper vermieden werden.

Diese Aufgabe wird erfindungsgemäß durch die Merkmale des Anspruches 1, d.h. dadurch gelöst, dass mindestens eine Ziehkörpertrageinrichtung vorgesehen ist, die einen formstabilen Grundkörper mit einem nach oben offenen U-förmigen Querschnittsprofil und ein im Grundkörper hängend angebrachtes, flexibles Lagerflächenelement zum Einlegen eines frisch extrudierten Ziehkörpers aufweist.

Mit der erfindungsgemäßen Vorrichtung ist es zuverlässig möglich, deformationsgefährdete, frisch extrudierte Ziehkörper beliebigen Querschnitts in das flexible Lagerflächenelement einzulegen, wobei sich das im Grundkörper der Ziehkörpertrageinrichtung hängend angebrachte flexible Lagerflächenelement - ähnlich einer Hängematte - an die Außenkontur des frisch extrudierten Ziehkörpers anlegt bzw. anschmiegt, bis das flexible Lagerflächenelement durch das Gewicht des frisch extrudierten Ziehkörpers soweit vorgespannt wird, dass das flexible Lagerflächenelement sich tangential vom Ziehkörper weg zur jeweiligen Einspannstelle des flexiblen Lagerflächenelementes am formstabilen Grundkörper U-förmigen Querschnittsprofils erstreckt. Nachdem das flexible Lagerflächenelement vom formstabilen Grundkörper bis auf die besagten Einspannstellen allseitig beabstandet ist, liegt der frisch extrudierte Ziehkörper im flexiblen Lagerflächenelement vom formstabilen Grundkörper beabstandet in einer stabilen Position. Damit werden unerwünschte Deformationen des frisch extrudierten Ziehkörpers auf einfache Weise zuverlässig vermieden.

Der formstabile Grundkörper und das flexible Lagerflächenelement sind luftdurchlässig oder mikrowellenstrahlendurchlässig, so dass es einfach und optimal möglich ist, den im flexiblen Lagerflächenelement einer Ziehkörpertrageinrichtung liegenden, frisch extrudierten Ziehkörper mit Trocknungsluft oder mit Hilfe von Mikrowellenstrahlung zu trocknen.

Zu diesem Zwecke kann der formstabile Grundkörper U-förmigen Querschnittsprofils mit Löchern ausgebildet sein, die beim Trocknen den freien Zutritt von Trocknungsluft oder im Falle einer Mikrowellentrocknung den freien Zutritt der elektromagnetischen Mikrowellen zum zu trocknenden Ziehkörper ermöglichen.

Das flexible Lagerflächenelement kann bspw. aus einem hochgradig luftdurchlässigen Gewebe bestehen. Im Falle einer Mikrowellentrocknung können der formstabile Grundkörper und das flexible Lagerflächenelement der Ziehkörpertrageinrichtung aus mikrowellenfesten Kunststoffen, wie beispielsweise Polypropylen, bestehen.

Als zweckmäßig hat es sich erwiesen, wenn die Ziehkörpertrageinrichtung eine Längenabmessung besitzt, die geringfügig kleiner ist als die Längenabmessung des jeweiligen frisch extrudierten Ziehkörpers, um eine kontinuierliche Extrusion und Abnahme und Entfernung extrudierter Ziehkörper vom Mundstück des Extruders zu ermöglichen, weil es durch eine solche Dimensionierung möglich ist, mit dem aus dem Mundstück des Extruders austretenden Ziehkörperstrang eine Abschneideeinrichtung mitlaufen zu lassen, die durch die Ziehkörpertrageinrichtung in keiner Weise beeinträchtigt wird.

Erfindungsgemäß hat es sich als vorteilhaft erwiesen, wenn eine Anzahl Ziehkörpertrageinrichtungen an einer Transporteinrichtung angeordnet sind, die einen Längsförderer und einen davon abzweigenden, zur Achse des Mundstückes des Extruders achsparallelen Querförderer mit einer Hebeeinrichtung für jeweils eine Ziehkörpertrageinrichtung aufweist. Dem Längsförderer ist dabei zweckmäßigerweise eine Pufferstation für eine Anzahl Ziehkörpertrageinrichtungen zugeordnet und der Längsförderer ist außerdem in vorteilhafter Weise mit einer Station zur Weiterbehandlung der frisch extrudierten, vom Ziehkörperstrang abgeschnittenen, einzelnen Ziehkörper verbunden. Bei dieser Weiterbehandlungsstation handelt es sich beispielsweise um eine Trocknungsstation. Diese Trocknungsstation kann - wie bereits erwähnt worden ist - mit Trocknungsluft oder mit einer Mikrowellenstrahlung arbeiten.

Als vorteilhaft hat es sich erwiesen, wenn vom Mundstück des Extruders unterseitig ein rinnenförmiges Stützblech wegsteht, dessen Innenkontur an die Mantelkontur des frisch extrudierten Ziehkörpers bzw. Ziehkörperstranges angepasst ist. Zur Verbesserung der Gleiteigenschaften zwischen dem frisch extrudierten Ziehkörper und dem vom Mundstück des Extruders unterseitig wegstehenden rinnenförmigen Stützblech kann dieses mit einem Gleitmedium benetzt sein. Bei diesem Gleitmedium handelt es sich beispielsweise um Petroleum, Glyzerin oder dergleichen.

Dem Vorderrand des Stützbleches ist vorzugsweise eine mit dem im jeweiligen flexiblen Lagerflächenelement eines formstabilen Grundkörpers liegenden, frisch extrudierten Ziehkörper mitlaufende Abschneideinrichtung zugeordnet.

Mit der erfindungsgemäßen Vorrichtung ergibt sich der Vorteil, dass Deformationen eines aus dem Mundstück eines Extruders frisch extrudierten Ziehkörpers durch Einlegen desselben in das flexible Lagerflächenelement einer Ziehkörpertrageinrichtung auf einfache Weise zuverlässig verhindert werden, wobei außerdem auch die Weiterbehandlung des frisch extrudierten deformationsgefährdeten Ziehkörpers, bei der es sich insbesondere um eine Trocknung des extrudierten Ziehkörpers handelt, optimal möglich ist.

Weiter Einzelheiten, Merkmale und Vorteil ergeben sich aus der nachfolgenden Beschreibung eines in der Zeichnung verdeutlichten Ausführungsbeispieles der erfindungsgemäßen Vorrichtung.

Es zeigen:
- Figur 1: eine Vorderansicht eines extrudierten Ziehkörpers in einem von einem Extruder wegstehenden, rinnenförmigen Stützblech sowie eine davon beabstandete Ziehkörpertrageinrichtung unter dem rinnenförmigen Stützblech,
- Figur 2: eine der Figur 1 ähnliche Vorderansicht, wobei die Ziehkörpertrageinrichtung angehoben ist, so dass sich das im Grundkörper hängend angebrachte flexible Lagerflächenelement der Ziehkörpertrageinrichtung an das rinnenförmige Stützblech unterseitig anschmiegt,
- Figur 3: eine den Figuren 1 und 2 ähnliche Vorderansicht des im flexiblen Lagerflächenelement liegenden extrudierten Ziehkörpers- nach dem simultanen axialen Wegbewegen des extrudierten Ziehkörpers und der Ziehkörpertrageinrichtung vom Extruder, d.h. vom rinnenförmigen Stützblech desselben,
- Figur 4: eine Seitenansicht in Blickrichtung des Pfeiles IV in Figur 3,
- Figur 5: abschnittweise in einer Draufsicht einen Extruder und eine zugehörige Transporteinrichtung für eine Anzahl Ziehkörpertrageinrichtungen,
- Figur 6: eine Seitenansicht in Blickrichtung des Pfeiles VI in Figur 5 zur Verdeutlichung eines ersten Betriebszustandes einer Ziehkörpertrageinrichtung,
- Figur 7: eine der Figur 6 ähnliche abschnittweise Seitenansicht zur Verdeutlichung eines auf den ersten Betriebszustand folgenden zweiten Betriebszustandes der Ziehkörpertrageinrichtung, und
- Figur 8: eine den Figuren 6 und 7 ähnliche Darstellung zur Verdeutlichung eines dritten Betriebszustandes einer Ziehkörpertrageinrichtung.

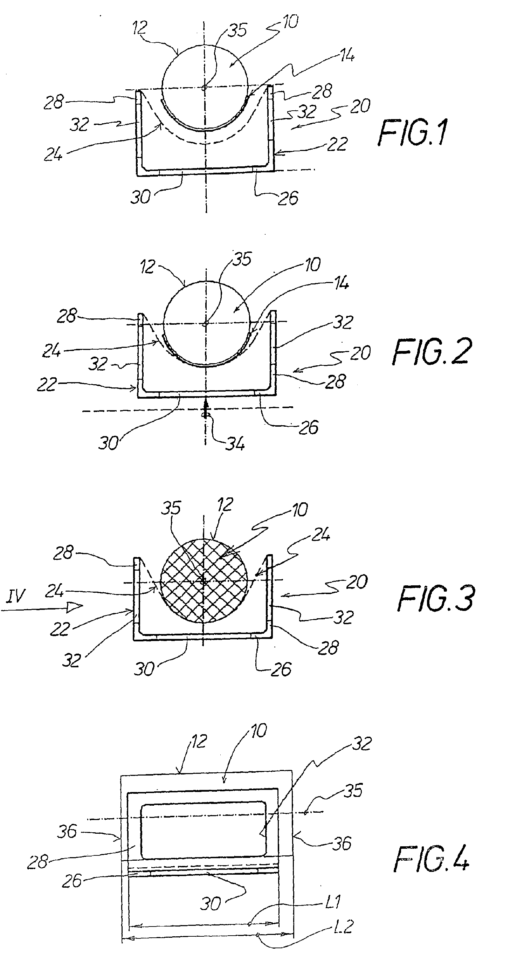

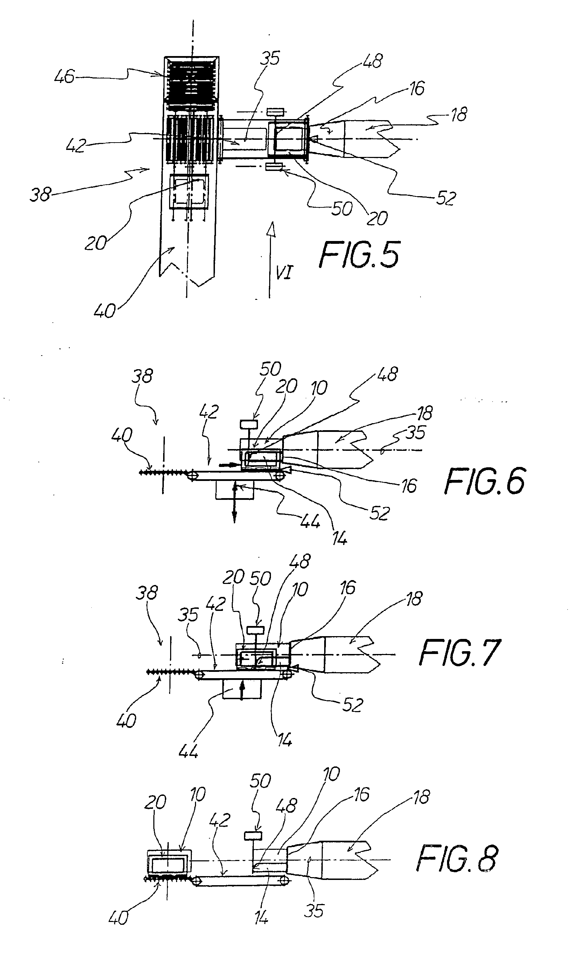

Figur 1 verdeutlicht in einer Stirnansicht einen deformationsgefährdeten, frisch horizontal extrudierten Ziehkörper 10 bzw. Ziehkörperstrang, bei dem es sich beispielsweise um einen Katalysatorkörper mit einer Wabenstruktur und einer kreiszylindrischen Mantelkontur 12 handelt. Der frisch extrudierte Ziehkörper 10 liegt in einem rinnenförmigen Stützblech 14, das von einem Mundstück 16 eines Extruders 18 (siehe die Figuren 5 bis 8) unterseitig horizontal wegsteht.

Zur Übernahme des frisch extrudierten Ziehkörpers 10 vom Extruder 18 bzw. vom rinnenförmigen Stützblech 14 desselben dient eine Ziehkörpertrageinrichtung 20, die einen formstabilen Grundkörper 22 mit einem nach oben offenen U-förmigen Querschnittsprofil und ein im Grundkörper hängend angebrachtes, flexibles Lagerflächenelement 24 aufweist, das zum Einlegen und zur temporären Lagerung eines frisch extrudierten Ziehkörpers 10 vorgesehen ist. Der formstabile Grundkörper 22 weist einen Boden 26 und zwei vom Boden 26 nach oben stehende Seitenwände 28 auf. Der Boden 26 ist mit mindestens einer Aussparung 30 und die Seitenwände 28 sind mit Aussparungen 32 ausgebildet, um einen freien Zutritt beispielsweise von Trocknungsluft zu dem zu trocknenden Ziehkörper 10 zu ermöglichen. Das flexible Lagerflächenelement 24 der Ziehkörpertrageinrichtung 20 besteht beispielsweise aus einem luftdurchlässigen Gewebe. Der formstabile Grundkörper 22 und das flexible Lagerflächenelement 24 können auch mikrowellenstrahlendurchlässig sein, wenn der Ziehkörper 10 mit Hilfe einer Mikrowellenstrahlung getrocknet werden soll.

Figur 1 verdeutlicht die Ziehkörpertrageinrichtung 20 vom rinnenförmigen Schutzblech 14 des Extruders 18 beabstandet. Demgegenüber verdeutlicht die Figur 2 den Betriebszustand der Ziehkörpertrageinrichtung 20, bei welchem diese in Bezug zum Mundstück 16 des Extruders derart angehoben ist, dass sich das flexible Lagerflächenelement 24 der Ziehkörpertrageinrichtung 20 unterseitig an das ringförmige Stützbleche 14 des Extruders 18 anschmiegt. Diese Anhebung der Ziehkörpertrageinrichtung 20 ist in Figur 2 durch den Pfeil 34 angedeutet. In diesem in Figur 2 gezeichneten Betriebszustand bewegen sich der kontinuierlich aus dem Mundstück 16 des Extruders 18 austretende Ziehkörperstrang bzw. Ziehkörper 10 und die Ziehkörpertrageinrichtung 20 simultan in Richtung der zur Zeichnungsebene der Figur 2 senkrechten Achse 35 des Mundstückes 16 des Extruders 18, wobei der Ziehkörper 10 vom rinnenförmigen Stützblech 14 an das flexible Lagerflächenelement 24 übergeben wird. Dieser Betriebszustand ist in Figur 3 verdeutlicht, in der gleiche Einzelheiten mit denselben Bezugsziffern wie in den Figuren 1 und 2 bezeichnet sind, so dass es sich erübrigt, in Verbindung mit den Figuren 1 bis 3 alle Einzelheiten jeweils detailliert zu beschreiben.

Figur 4 verdeutlicht in einer Seitenansicht einen Ziehkörper 10, der in einer Ziehkörpertrageinrichtung 20 liegt. Die Ziehkörpertrageinrichtung 20 besitzt eine Längenabmessung L1, die geringfügig kleiner ist als die Längenabmessung L2 des Ziehkörpers 10, wobei der Ziehkörper 10 mit seinen beiden Stirnflächen 36 über die Seitenwände 28 des formstabilen Grundkörpers 22 der Ziehkörpertrageinrichtung 20 übersteht. Die Figur 4 verdeutlicht außerdem die Aussparung 32 in der jeweiligen Seitenwand 28. Mit der Bezugsziffer 30 ist die im Boden 26 des formstabilen Grundkörpers 22 ausgebildete Aussparung bezeichnet.

Figur 5 verdeutlicht in einer Draufsicht abschnittweise eine dem Extruder 18 zugeordnete Transporteinrichtung 38 für Ziehkörpertrageinrichtungen 20. Die Transporteinrichtung 38 weist einen Längsförderer 40 und einen von diesem abzweigenden Querförderer 42 auf. Der Querförderer 42 ist zur Achse 35 des Mundstücks 16 des Extruders 18 parallel orientiert und mit einer Hebeeinrichtung 44 (siehe die Figuren 6 und 7) kombiniert, d.h. anhebbar und absenkbar.

Der Längsförderer 40 weist eine Pufferstation 46 für eine Anzahl Ziehkörpertrageinrichtungen auf und ist mit einer (nicht dargestellten) Station zur Weiterbehandlung der extrudierten Ziehkörper 10 verbunden. Bei dieser Weiterbehandlungsstation handelt es sich beispielsweise um eine Trocknungsstation.

Dem Vorderrand 48 des vom Mundstück 16 des Extruders 18 unterseitig wegstehenden rinnenförmigen Stützbleches 14 ist eine Abschneideeinrichtung 50 zugeordnet, die mit dem aus dem Mundstück 16 des Extruders 18 kontinuierlich austretenden Ziehkörperstrang mitläuft, um den Ziehkörperstrang in einzelne Ziehkörper 10 auseinander zu schneiden.

Dem Mundstück 16 des Extruders 18 ist außerdem ein Anschlag 52 zugeordnet.

Wie die Figur 6 verdeutlicht, wird eine Ziehkörpertrageinrichtung 20 von der Pufferstation 46 (siehe Figur 5) entlang dem Querförderer 42 in dessen abgesenktem Zustand zur Achse 35 parallel in Richtung zum Mundstück 16 des Extruders 18 bewegt, bis die Ziehkörpertrageinrichtung 20 an dem Anschlag 52 ansteht. Dabei unterfährt die Ziehkörpertrageinrichtung 20 vom rinnenförmigen Stützblech 14 beabstandet das rinnenförmige Stützblech 14. Sobald die Ziehkörpertrageinrichtung 20 den Anschlag 52 erreicht hat, wird mit Hilfe der Hebeeinrichtung 44 der Querförderer 42 angehoben (siehe Figur 7), bis sich das flexible Lagerflächenelement 24 der Ziehkörpertrageinrichtung 20 unterseitig an das rinnenförmige Stützblech 14 anschmiegt (siehe auch Figur 2). Anschließend wird die Ziehkörpertrageinrichtung 20 synchron mit dem kontinuierlich aus dem Mundstück 16 des Extruders 18 austretenden Ziehkörper-Strang mitbewegt und nach Abschneiden des Ziehkörper-Stranges mittels der mitlaufenden Abschneideeinrichtung 50 der entsprechende Ziehkörper 10 schnell vom Extruder 18 entfernt und eine leere Ziehkörpertrageinrichtung 20 zum Extruder 18 zugeführt (siehe Figur 6). Gleichzeitig bewegt sich die Abschneideeinrichtung 50 wieder in ihre Ausgangsposition zurück. Die mit einem Ziehkörper 10 belegte Ziehkörpertrageinrichtung 20 wird entlang des Längsförderers 40 zur Weiterbehandlung, insbesondere zur Trocknung, abtransportiert.

Mit Hilfe des flexiblen Lagerflächenelementes 24 der jeweiligen Ziehkörpertrageinrichtung 20 ergibt sich der Vorteil, dass Beschädigungen der weichen und deformationsgefährdeten Ziehkörper 10 zuverlässig vermieden werden. In bzw. mit der jeweiligen Ziehkörpertrageinrichtung 20 sind die besagten Ziehkörper 10 einfach transportierbar.

Der Übernahmevorgang der Ziehkörper 10 erfolgt synchron mit der Vorschubbewegung des aus dem Mundstück 16 des Extruders 18 austretenden Ziehkörper-Stranges ohne Relativbewegung zwischen dem Ziehkörper-Strang 10 und der jeweiligen Ziehkörpertrageinrichtung 20 bzw. dessen flexiblem Lagerflächenelement 24 für den jeweiligen vom Ziehkörperstrang abgeschnittenen Ziehkörper 10.

Gleiche Einzelheiten sind in den Figuren 5 bis 8 wie in den Figuren 1 bis 4 jeweils mit denselben Bezugsziffern bezeichnet, so dass es sich erübrigt, in Verbindung mit den Figuren alle Einzelheiten jeweils detailliert zu beschreiben.

## Patentansprüche

1. Vorrichtung zum Abnehmen und Entfernen deformationsgefährdeter, frisch horizontal extrudierter Ziehkörper (10) vom Mundstück (16) eines Extruders (18),
**dadurch gekennzeichnet,**
**dass** mindestens eine Ziehkörpertrageinrichtung (20) vorgesehen ist, die einen formstabilen Grundkörper (22) mit einem nach oben offenen U-förmigen Querschnittsprofil und ein im Grundkörper (22) hängend angebrachtes, flexibles Lagerflächenelement (24) zum Einlegen eines frisch extrudierten Ziehkörpers (10) aufweist.

2. Vorrichtung nach Anspruch 1,
**dadurch gekennzeichnet,**
**dass** der formstabile Grundkörper (22) und das flexible Lagerflächenelement (24) der Ziehkörpertrageinrichtung (20) luftdurchlässig sind.

3. Vorrichtung nach Anspruch 1,
**dadurch gekennzeichnet,**
**dass** der formstabile Grundkörper (22) und das flexible Lagerflächenelement (24) der Ziehkörpertrageinrichtung (20) mikrowellenstrahlendurchlässig sind.

4. Vorrichtung nach einem der Ansprüche 1-3,
**dadurch gekennzeichnet,**
**dass** die mindestens eine Ziehkörpertrageinrichtung (20) eine Längenabmessung (L1) besitzen, die geringfügig kleiner ist als die Längenabmessung (L2) des jeweiligen frisch extrudierten Ziehkörpers (10).

5. Vorrichtung nach einem der Ansprüche 1 - 4,
**dadurch gekennzeichnet,**
**dass** eine Anzahl Ziehkörpertrageinrichtungen (20) an einer Transporteinrichtung (38) angeordnet sind, die einen Längsförderer (40) und einen davon abzweigenden, zur Achse (35) des Mundstückes (16) des Extruders (18) achsparallelen Querförderer (42) mit einer Hebeeinrichtung (44) für jeweils eine Ziehkörpertrageinrichtung (20) aufweist.

6. Vorrichtung nach Anspruch 5,
**dadurch gekennzeichnet,**
**dass** der Längsförderer (40) eine Pufferstation (46) für Ziehkörpertrageinrichtungen (20) aufweist und mit einer Station zur Weiterbehandlung der deformationsgefährdeten, frisch extrudierten Ziehkörper (10) verbunden ist.

7. Vorrichtung nach Anspruch 6,
**dadurch gekennzeichnet,**
**dass** die Weiterbehandlungsstation eine Trocknungsstation ist.

8. Vorrichtung nach Anspruch 1,
**dadurch gekennzeichnet,**
**dass** vom Mundstück (16) des Extruders (18) unterseitig ein rinnenförmiges Stützblech (14) wegsteht, dessen Innenkontur an die Mantelkontur (12) des frisch extrudierten Ziehkörpers (10) angepasst ist.

9. Vorrichtung nach Anspruch 8,
**dadurch gekennzeichnet,**
**dass** das rinnenförmiges Stützblech (14) mit einem Gleitmedium benetzt ist.

10. Vorrichtung nach Anspruch 8,
**dadurch gekennzeichnet,**
**dass** dem Vorderrand (48) des rinnenförmigen Stützbleches (14) eine mit dem frisch extrudierten Ziehkörperstrang mitlaufende Abschneideinrichtung (50) zugeordnet ist.
